# EUROPÄISCHE PATENTSCHRIFT

(11) **EP 0 961 638 B1**
(45) Veröffentlichungstag und Bekanntmachung des Hinweises auf die Patenterteilung: **12.12.2001**
(21) Anmeldenummer: 98914810.1
(22) Anmeldetag: 24.02.1998
(51) Int. Cl.: A62C 3/00, A62C 35/00, E04B 1/94, A47C 5/00, A62C 35/02

(54) **ENTSTEHUNGSBRAND-GESICHERTES ELEMENT UND VERFAHREN ZU DEREN HERSTELLUNG**
ELEMENT PROTECTED AGAINST FIRE OUTBREAKS AND METHOD FOR PRODUCING SUCH AN ELEMENT PROTECTED AGAINST FIRE OUTBREAKS
ELEMENT PROTEGE CONTRE LE DEPART DE FEU ET PROCEDE DE FABRICATION DUDIT ELEMENT

(30) Priorität: 24.02.1997 DE 19707088
(43) Veröffentlichungstag der Anmeldung: 08.12.1999
(73) Patentinhaber: GRAMMER AG, 92224 Amberg (DE)
(72) Erfinder: HARTMANN, Ludwig, D-92286 Rieden (DE); HAYESSEN, Rainer, D-93051 Regensburg (DE)
(74) Vertreter: LOUIS, PÖHLAU, LOHRENTZ & SEGETH
(86) Internationale Anmeldenummer: DE9800538
(87) Internationale Veröffentlichungsnummer: WO9836798

(56) Entgegenhaltungen:
- EP-A- 0 368 107
- EP-A- 0 649 669
- EP-A- 0 716 194
- DE-A- 3 814 751
- DE-A- 3 902 600
- FR-A- 2 003 124
- US-A- 4 992 310
- DATABASE WPI Section Ch, Week 7437 Derwent Publications Ltd., London, GB; Class E34, AN 74-65591v XP002072276 & JP 49 031 084 B (K. SHIMIZU) , 19.August 1974
- DATABASE WPI Section Ch, Week 9138 Derwent Publications Ltd., London, GB; Class F09, AN 91-279027 XP002072277 & SU 1 600 793 A (DONBASS MINE RESCUE) , 23.Oktober 1990

## Beschreibung

Die Erfindung betrifft ein Entstehungsbrand-gesichertes Element, wie ein Polsterteil, ein Bauteil, ein Installationselement, ein Dekorationselement o.dgl., das mit einer Entstehungsbrand-bekämpfenden Ausrüstung versehen ist, die an einen Träger gebundenes Löschwasser aufweist, wobei der Träger von einem Pulver gebildet ist, das in Verbindung mit dem Löschwasser zu einem das Löschwasser bindenden Gel aufquillt, das in luft- bzw. wasserdampfdichten, voneinander beabstandeten Lagervolumina bevorratet ist, die durch zwei sich überdeckende Folien festgelegt sind, sowie ein Verfahren zur Herstellung eines solchen Elementes wie bspw. eines Polsterteiles.

Für Fahrzeugsitze gilt bezüglich der Prüfung auf Brandsicherheit bspw. die Norm DIN 5510, Teil 2, oder die Norm UIC 564-2. Dabei werden 100 g Papier auf dem Sitzpolster des zu testenden Sitzes angeordnet und an vier Seiten angezündet. 100 g Papier benötigen zum vollständigen Verbrennen größenordnungsmäßig drei Minuten. Damit ein Sitzpolster eines Fahrzeugsitzes die erwähnte DIN 5510, Teil 2, erfüllt, muß das sich vom Papier auf den Fahrzeugsitz ausdehnende Feuer innerhalb von fünfzehn Minuten erlöschen. Nach der UIC 564-2 muß das entsprechende Feuer innerhalb von zehn Minuten erlöschen.

Um die genannten Normen zu erfüllen, wurde bereits vorgeschlagen, den Schaumkern des jeweiligen Polsterteiles eines Fahrzeugsitzes mit einem Brandschutzmittel zu kombinieren bzw. auszurüsten. Ein solchermaßen ausgerüstetes Polsterteil kann unter Umständen bezüglich Brandsicherheit noch Wünsche offen lassen.

Ein Entstehungsbrand-gesichertes Element der eingangs genannten Art ist aus der DE-A 38 14 751 bekannt. Dieses Entstehungsbrand-gesicherte Element kommt bspw. als Wärmedämmung von Industriedächern zur Anwendung. Die Lagervolumina sind dort bspw. von einem Folienschlauch gebildet, der in Abschnitte - ähnlich einer Kette von Würsten - unterteilt ist. Die Lagervolumina können dort z.B. auch als Kammern nach Art einer Luftmatratze ausgebildet sein.

Der Erfindung liegt die Aufgabe zugrunde, ein Entstehungsbrand-gesichertes Element und ein Verfahren zu seiner Herstellung anzugeben, wobei das an den Träger gebundene Löschwasser, d.h. das Gel, mit dem Entstehungsbrand-gesicherten Element mittels eines Flächenelementes zuverlässig derartig verbunden ist, daß das Gel bzw. das Löschwasser bei einem Brand optimal wirksam wird.

Diese Aufgabe wird gegenständlich erfindungsgemäß dadurch gelöst, daß das Pulver aus einer Mischung auf Polymerbasis mit anorganischen Stoffen besteht, und daß die beiden Folien von den Lagervolumina beabstandet mit Ausnehmungen ausgebildet sind.

Das erfindungsgemäße Entstehungsbrand-gesicherte Element, bei dem es sich bspw. um ein Polsterteil für einen Fahrzeugsitz, um ein Bauteil wie ein Trennwandelement, ein Bodenelement, ein Deckenelement o.dgl., um ein Installationselement wie einen Kabelschacht oder ein Dekorationselement wie einen Teppich- oder Bodenbelag, ein Wand-Tapetenelement, ein Bekleidungsstück für einen Feuerwehrmann, einen Autorennfahrer o.dgl. handeln kann, ist mit einer Entstehungsbrand-bekämpfenden Ausrüstung versehen, die an einen Träger gebundenes Löschwasser aufweist. Der Träger ist von einem Pulver gebildet, das aus einer Mischung, ein organisches Polymer und anorganische Stoffe enthaltend, besteht und das in Verbindung mit dem Löschwasser zu einem das Löschwasser bindenden Gel aufquillt. In dem Gel ist das Löschwasser also gebunden, so daß ein den Löschvorgang nicht unterstützendes Abfließen verhindert wird. Ein derartiges Pulver ist bspw. aus dem Prospekt der Fa. ÖKO-TEC Umweltschutzsysteme GmbH, 63576 Freigericht, bekannt. Derartige Pulver sind auch als sog. Superabsorber-Pulver bekannt, die bei Hygieneartikeln wie Windeln, Inkontinenzeinlagen o.dgl. zur Anwendung gelangen, um eine entsprechende Quantität Flüssigkeit aufnehmen und speichern zu können.

Sowohl bei den im Prospekt der Fa. ÖKO-TEC Umweltschutzsysteme GmbH beschriebenen Vorschlägen zur Brandbekämpfung als auch bei den erwähnten Superabsorber-Pulvern kommt das Pulver im trockenen Lagerzustand erst zu gegebener Zeit, d.h. bei der Brandbekämpfung oder zur Aufnahme der Körperflüssigkeit bei ihrer Abgabe zum Einsatz, wobei es zu einem Gel aufquillt bzw. zu einem Gel aufgequollen werden muß. Im Gegensatz hierzu ist erfindungsgemäß das besagte Pulver bereits im normalen lageraktiven Betriebszustand mit der entsprechenden Quantität Löschwasser vermischt, d.h. zu einem Gel aufgequollen, so daß es nicht fließend gebunden ist.

Erfindungsgemäß kann das Gel aus ca. 5 Gew.-% Pulver und aus ca. 95 Gew.-% Löschwasser zusammengesetzt sein.

Ein solchermaßen ausgerüstetes Polsterteil, d.h. ein Polsterteil eines Fahrzeugsitzes, das mit einem solchermaßen ausgebildeten Entstehungsbrand-gesicherten Element ausgerüstet ist, erfüllt die eingangs genannten Normen DIN 5510, Teil 2, bzw. UIC 564-2 sehr zuverlässig, weil der erwähnte Testbrand bereits nach ca. zwei bis drei Minuten gelöscht ist. D.h., daß nicht einmal das sonst innerhalb von größenordnungsmäßig drei Minuten abbrennende Papier vollständig abbrennt, sondern durch das im Entstehungsbrand-gesicherten Element bevorratete gebundene Löschwasser gelöscht wird. Daraus wird außerdem klar, daß mit dem erfindungsgemäßen Element in vorteilhafter Weise auch Wasserschäden sehr zuverlässig vermieden werden.

Erfindungsgemäß ist das Gel in wasserdampfdichten Lagervolumina bevorratet, die durch zwei sich überdeckende luft- bzw. wasserdampfdichte Folien festgelegt sind, die miteinander entlang ihres Außenrandes dicht verbunden sind.

Um ein derartiges Lagervolumenelement mit einer mindestens annähernd konstanten Wanddicke über seine Flächenerstreckung zu realisieren, können die beiden Folien durch zusätzliche Verbindungsstege miteinander verbunden sein.

Bei einer anderen Ausbildung ist mindestens eine der beiden Folien mit voneinander beabstandeten Vertiefungen ausgebildet, welche die Lagervolumina für das Gel bilden. Die einzelnen Lagervolumina können hierbei z.B. größenordnungsmäßig 0,5 ml betragen. Die einzelnen Lagervolumina können auch kleiner oder größer sein. Die gewählte Größe der Lagervolumina ist vom Einsatzzweck des erfindungsgemäßen Entstehungsbrand-gesicherten Elementes abhängig. Durch geeignete Auswahl des Materials für die beiden Folien des erfindungsgemäßen Elementes ist außerdem eine Beeinflussung dahingehend möglich, daß das Gel bei unterschiedlichen Temperaturen, z.B. bei 150 oder bei 200°C, freigelegt wird.

Kommt das erfindungsgemäße Entstehungsbrand-gesicherte Element bspw. bei Polsterteilen für Fahrzeugsitze o.dgl. zum Einsatz, so kann es zweckmäßig sein, wenn die beiden Folien von den Lagervolumina bildenden Vertiefungen beabstandet mit deckungsgleichen Ausnehmungen ausgebildet sind. Durch diese Ausnehmungen kann das zur Herstellung des Polsterkernes eines solchen Polsterteiles zur Anwendung gelangende Reaktionsgemisch während des Ablaufes der Reaktion, d.h. während des Aufschäumens hindurchtreten, wodurch eine zuverlässige Verankerung des Elementes im Polsterkern gewährleistet wird. Außerdem wird hierdurch das Sitzklima nicht negativ beeinflußt.

Die Ausnehmungen können hierbei als Löcher oder als Schlitze ausgebildet sein.

Erfindungsgemäß ist es bspw. auch möglich, das Gel in voneinander getrennten, unabhängigen Volumenelementen zu bevorraten, die z.B. aus Folien ausgestanzt werden, und die Volumenelemente dem Reaktionsgemisch zuzugeben.

Verfahrensgemäß wird die der Erfindung zugrundeliegende Aufgabe dadurch gelöst, daß zur Herstellung eines Lagervolumenelementes zwei luftdichte Folien miteinander derartig verschweißt werden, daß sich zwischen den beiden Folien voneinander beabstandete, mit einem Gel gefüllte Lagervolumina ergeben, daß das flächige Lagervolumenelement in eine Gießform eingebracht wird, und daß danach in die Gießform ein Reaktionsgemisch eingebracht wird, das in der Gießform aufschäumt und die Gießform unter Ausbildung des Elementes ausfüllt.

Wie bereits weiter oben erwähnt worden ist, kann das Lagervolumenelement in den einzelnen voneinander beabstandeten Lagervolumina anstelle eines solchen Gels aus Superabsorber-Pulver und Löschwasser bspw. auch Kristallwasser bindendes kristallines Material enthalten. Ein Gel aus Superabsorber-Pulver und Löschwasser weist im Vergleich zu einem derartigen kristallinen Material den Vorteil auf, daß der Gewichtsanteil Löschwasser im Vergleich zum Gewichtsanteil von Hydrat- bzw. Kristallwasser groß ist.

Erfindungsgemäß kann das flächige Gel-Lagervolumenelement in die Gießform derartig eingebracht werden, daß es vom Formunterteil der Gießform beabstandet ist. Erfindungsgemäß ist es auch möglich, daß in die Gießform ein Schaumkörper eingebracht wird, der an seiner Innen- bzw. Rückseite mit einem flächigen Gel-Lagervolumenelement verbunden ist. Im zuletzt genannten Fall kann der mit dem Gel-Lagervolumenelement versehene Schaumkörper außerhalb der Gießform hergestellt, mit dem Gel-Lagervolumenelement verbunden und danach in die Gießform eingebracht werden. Das bedingt im Vergleich zu der erfindungsgemäßen Verfahrensvariante, bei welcher das flächige Gel-Lagervolumenelement in die Gießform derartig eingebracht wird, daß es vom Formunterteil der Gießform beabstandet ist, einen größeren Produktions- und Manipulationsaufwand.

Wird erfindungsgemäß z.B. ein Polsterteil mit einem Bezug in einem an sich bekannten Hinterschäum-Verfahren hergestellt, so ist es zweckmäßig, wenn erfindungsgemäß in die Gießform ein Bezug eingebracht wird, der an seiner Innen- bzw. Rückseite mit dem flächigen Gel-Lagervolumenelement verbunden ist. Diese Verbindung kann durch eine an sich bekannte Kaschierung erfolgen. Zur Realisierung eines Polsterteiles mit gutem Sitzklima ist es hierbei zweckmäßig, wenn das flächige Lagervolumenelement perforiert, d.h. luftdurchlässig ist.

Wie bereits erwähnt worden ist, kann das Gel auch in voneinander getrennten, dem Reaktionsgemisch zugegebenen Volumenelementen nach Art von kleinen Kapseln, Kügelchen o.dgl. bevorratet sein.

Weitere Einzelheiten, Merkmale und Vorteile ergeben sich aus der nachfolgenden Beschreibung verschiedener Verfahren zur Herstellung von Entstehungsbrand-gesicherten Elementen bzw. Polsterteilen. Es zeigen:
- Fig. 1: stark vergrößert in einer Schnittdarstellung einen Abschnitt eines flächigen Lagervolumenelementes für ein Entstehungsbrand-gesichertes Element,
- Fig. 2: eine perspektivische Ansicht einer zweiten Ausbildung eines abschnittweise gezeichneten flächigen Lagervolumenelementes für ein Entstehungsbrand-gesichertes Element,
- Fig. 3: in einer der Fig. 2 ähnlichen perspektivischen Ansicht eine dritte Ausführungsform des flächigen Lagervolumenelementes für ein Entstehungsbrand-gesicherte Element,
- Fig. 4: eine Draufsicht auf einen Abschnitt des Elementes gemäß Fig. 3,
- Fig. 5: in einer der Fig. 2 ähnlichen perspektivischen Ansicht eine vierte Ausbildung des flächigen Lagervolumenelementes für ein Entstehungsbrand-gesichertes Element,
- Fig. 6: eine Draufsicht auf das Element gemäß Fig. 5,
- Fig. 7: abschnittweise das Element gemäß den Figuren 5 und 6, wobei die einzelnen Lagervolumina insbes. für ein Gel aus Superabsorber-Pulver + Löschwasser aus der Folienebene herausgeklappt sind,
- Fig. 8A: einen Schnitt durch eine Gießform mit einem Formunterteil und einem ersten Formoberteil,
- Fig. 8B: das Formunterteil gemäß Fig. 8A nach dem Entfernen des ersten Formoberteils und der Anordnung eines zweiten Formoberteils an dem Formunterteil,
- Fig. 9A: eine Schnittdarstellung einer zweiten Gießform mit einem Formunterteil und einem zugehörigen ersten Formoberteil,
- Fig. 9B: das Formunterteil gemäß Fig. 9A nach dem Entfernen des ersten Formoberteils und dem Anbringen eines zweiten Formoberteils am Formunterteil,
- Fig. 10A: eine dritte Ausbildung einer Gießform bzw. eines Formunterteils einer Gießform,
- Fig. 10B: das Formunterteil gemäß Fig. 10A nach dem Anbringen eines zugehörigen Formoberteils,
- Fig. 11: einen Schnitt durch eine weitere Ausbildung einer Gießform mit einem Formunterteil und einem zugehörigen Formoberteil,
- Fig. 12A: einen Schnitt durch eine offene Gießform bzw. ein Formunterteil,
- Fig. 12B: das Formunterteil gemäß Fig. 12A in Kombination mit einem zugehörigen Formoberteil,
- Fig. 13A: ein offenes Formunterteil ähnlich dem in Fig. 12A gezeichneten Formunterteil in einer entsprechenden Schnittdarstellung,
- Fig. 13B: das Formunterteil gemäß Fig. 13A in Kombination mit einem zugehörigen Formoberteil, und
- Fig. 13C: eine der Fig. 13B ähnliche Schnittdarstellung nach dem vollständigen Aufschäumen eines Reaktionsgemisches zur Ausbildung eines Polsterteils.

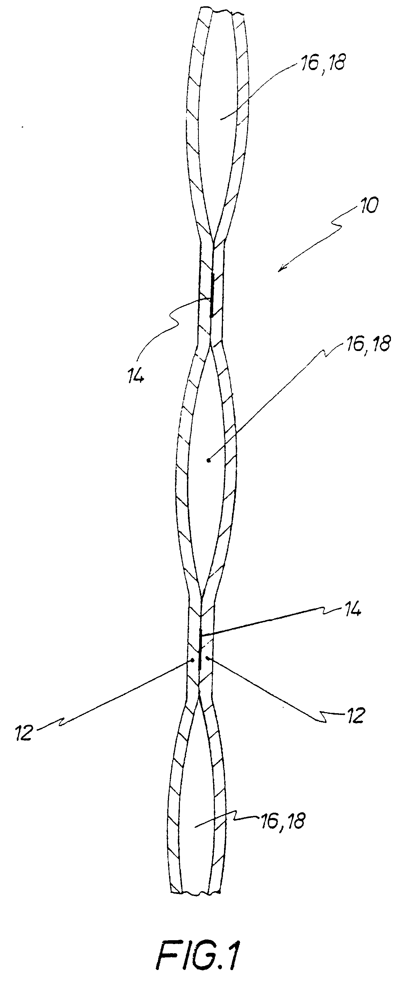

Fig. 1 zeigt abschnittweise längsgeschnitten ein flächiges Lagervolumenelement 10, das zwei luftdichte Folien 12 aufweist, die entlang von Schweißstellen 14 miteinander derartig verbunden sind, daß zwischen den beiden Folien 12 voneinander beabstandete Lagervolumina 16 gebildet sind. Durch die beiden sich überdeckenden Folien 12 sind die Lagervolumina 16 luft- bzw. wasserdampfdicht abgeschlossen. Die Lagervolumina 16 sind vorzugsweise mit einem Gel 18 gefüllt, bei dem es sich um ein Superabsorber-Pulver handelt, das mit Löschwasser gemischt ist. Das flächige Lagervolumenelement 10 bildet somit einen Löschwasser-Speicher.

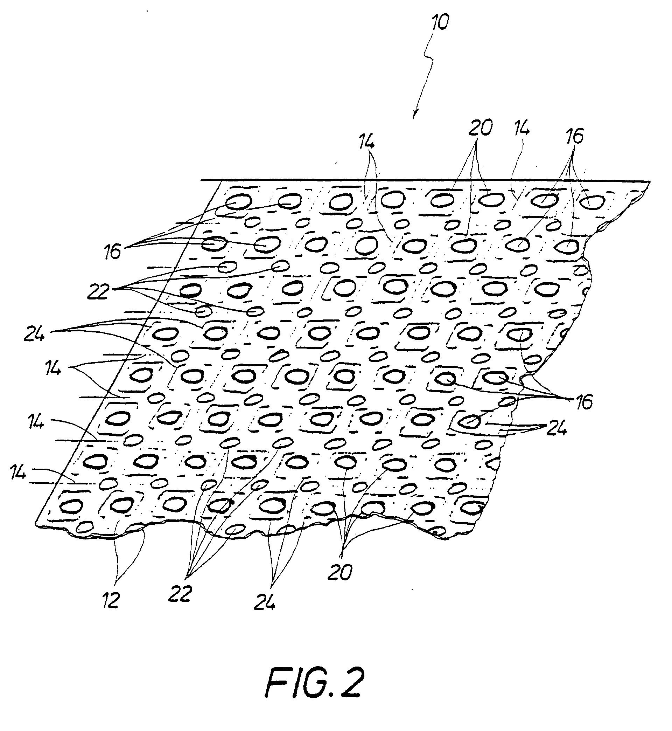

Fig. 2 zeigt eine Ausbildung eines flächigen Lagervolumenelementes 10 mit zwei sich überdeckenden Folien 12, die miteinander entlang kreisrunder Schweißlinien 20 verschweißt oder die miteinander derartig flächig verklebt sind, daß durch die beiden Folien 12 Lagervolumina 16 gebildet sind. Von den Lagervolumina 16 beabstandet sind die beiden Folien 12 deckungsgleich mit Perforationslöchern 22 ausgebildet, deren Zweck weiter unten bspw. in Verbindung mit Fig. 13B beschrieben wird.

Außerdem sind die beiden Folien 12 in der Nachbarschaft der Lagervolumina 16 mit U-förmigen Schlitzen 24 ausgebildet, die abwechselnd jeweils um 90° verdreht vorgesehen sind. Durch die Schlitze 24 wird die Dehnbarkeit der beiden Folien 12 und somit des flächigen Lagervolumenelementes 10 entsprechend verbessert. Eine solche verbesserte Dehnbarkeit des flächigen Lagervolumenelementes 10 ist zweckmäßig, wenn das Lagervolumenelement 10 z.B. in einem Polsterteil vorgesehen ist, das in einem Schäumvorgang hergestellt wird.

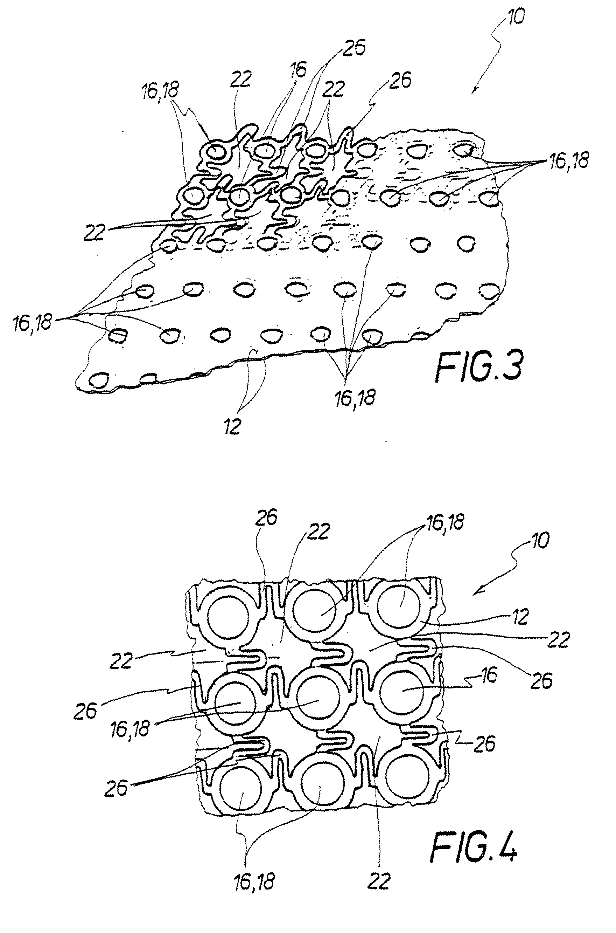

Die Figuren 3 und 4 zeigen eine andere Ausbildung eines flächigen Lagervolumenelementes 10 in einer perspektivischen Ansicht und in einer Ansicht von oben oder von unten. Auch bei dieser Ausbildung des flächigen Lagervolumenelementes 10 sind zwei luft- bzw wasserdampfdichte Folien 12 übereinander angeordnet und miteinander derartig verbunden, d.h. verschweißt, verklebt o.dgl., daß zwischen den beiden Folien 12 voneinander beabstandet Lagervolumina 16 festgelegt sind. Die Lagervolumina 16 sind zur Unterbringung eines Gels aus einem Superabsorber-Pulver + Löschwasser vorgesehen. Bei der in den Figuren 3 und 4 gezeichneten Ausbildung des flächigen Lagervolumenelementes 10 sind die beiden miteinander verbundenen Folien 12 derartig gestanzt, daß sich neben den Lagervolumina 16 Perforationslöcher 22 mit Dehnungsbrücken 26 aus den beiden Folien 12 ergeben. Das solchermaßen ausgebildete Lagervolumenelement 10 weist eine ausgezeichnete Dehnbarkeit und Flexibilität in allen Raumrichtungen auf.

Die voneinander beabstandeten und wasserdampfdicht abgeschlossenen Lagervolumina 16 des flächigen Lagervolumenelementes 10 sind mit einem Gel 18 aus Superabsorber-Pulver + Löschwasser gefüllt. Dabei kann das Gewichtsverhältnis von Superabsorber-Pulver und Löschwasser 5 Gew.-% zu 95 Gew.-% betragen. Selbstverständlich sind auch andere Mischungsverhältnisse realisierbar.

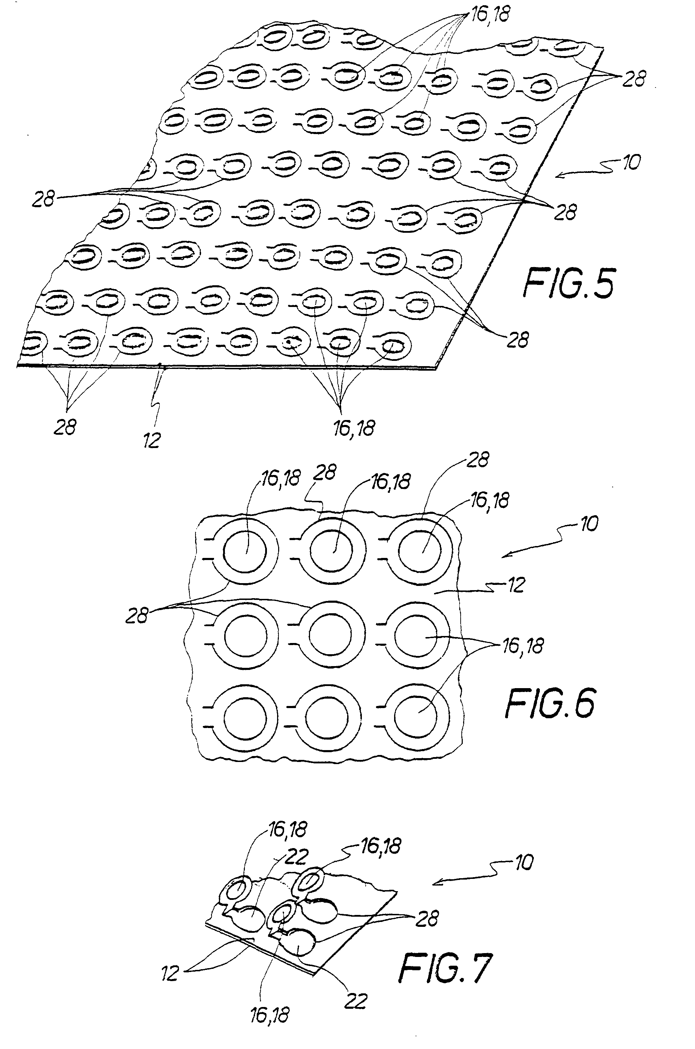

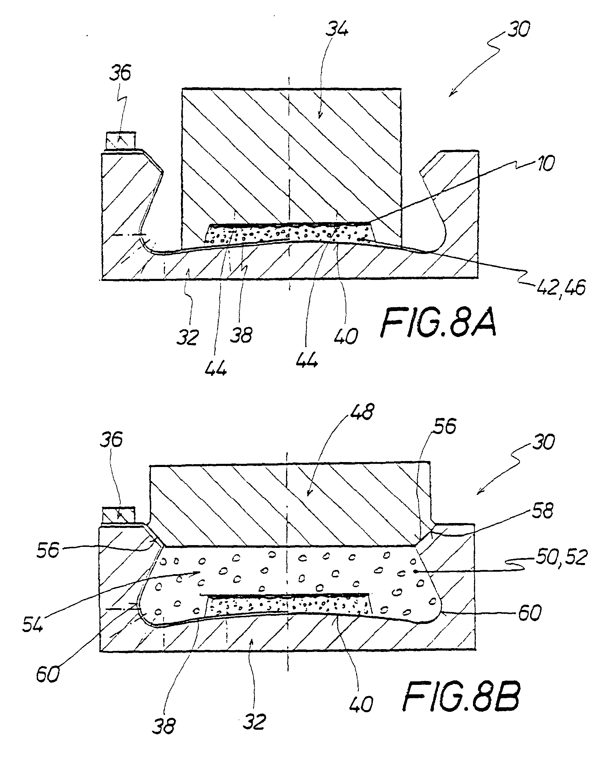

Die Figuren 5, 6 und 7 zeigen eine Ausbildung des flächigen Lagervolumenelementes 10 bestehend aus zwei sich überdeckenden Folien 12 aus einem geeigneten Kunststoffmaterial wie PA, PP o.dgl. Durch die beiden miteinander dicht verbundenen Folien 12 werden voneinander beabstandete Lagervolumina 16 festgelegt, die mit einem Gel 18 aus Superabsorber-Pulver und Löschwasser gefüllt sind. Von den Lagervolumina 16 beabstandet sind schlüssellochartige Schlitze 28 in den beiden Folien 12 vorgesehen, so daß es möglich ist, die einzelnen Lagervolumina 16 aus der Ebene des flächigen Lagervolumenelementes 10 herauszuklappen, wie in Fig. 7 gezeichnet ist. Wird ein solches flächiges Lagervolumenelement 10 gemäß den Figuren 5 und 6 in eine Gießform eingebracht, in die daran anschließend ein Reaktionsgemisch eingebracht wird, so kann das Reaktionsgemisch bei Reaktionsablauf, d.h. beim Aufschäumen die Lagervolumina 16 in die in Fig. 7 gezeichnete aufgeklappte Position verschwenken, so daß sich eine entsprechende Verankerung des Lagervolumenelementes 10 im aufgeschäumten Element wie bspw. einem Polsterteil ergibt. Diverse Verfahrensvarianten zur Herstellung eines Polsterteiles bspw. für einen Fahrzeugsitz werden nachfolgend in Verbindung mit den Figuren 8A bis 13C beschrieben.

Fig. 8A zeigt in einer Schnittdarstellung eine Gießform 30 mit einem Formunterteil 32 und einem zugehörigen ersten Formoberteil 34. Die linke Zeichnungshälfte zeigt einen zum Formunterteil 32 zugehörigen Spannrahmen 36, der zum Festlegen eines Bezuges 38 an der Innenkontur 40 des Formunterteiles 32 vorgesehen ist. Der Bezug 38 wird in das Formunterteil 32 eingelegt und an die Innenkontur 40 eng und faltenfrei in an sich bekannter Weise angesaugt.

Die rechte Zeichnungshälfte der Fig. 8A zeigt ein Formunterteil 32 ohne Spannrahmen 36. Hier wird also ein Polsterteil ohne Bezug realisiert.

Das erste Formoberteil 34 wird in das Formunterteil 32 derartig eingebracht, daß zwischen dem ersten Formoberteil 34 und dem Formunterteil 32 ein erster Formhohlraum 42 festgelegt ist. Das erste Formoberteil 34 ist mit Halteelementen 44 versehen, die zum Festlegen eines flächigen Lagervolumenelementes 10 dienen, wie es weiter oben in Verbindung mit den Figuren 1 bis 7 beispielhaft beschrieben worden ist.

In den ersten Formhohlraum 42 wird ein erstes Reaktionsgemisch 46 eingebracht, das im ersten Formhohlraum 42 aufschäumt und den ersten Formhohlraum 42 vollständig ausfüllt. Bei diesem ersten Reaktionsgemisch 46 handelt es sich bspw. um ein PUR-Reaktionsgemisch, das mit einem Brandschutzmittel gemischt, d.h. ausgerüstet sein kann.

Nach Ablauf der Reaktion des ersten Reaktionsgemisches 46 wird das erste Formoberteil 34 vom Formunterteil 32 der Gießform 30 entfernt, wobei das erste Reaktionsgemisch 46 mit dem an ihm festgelegten flächigen Lagervolumenelement 10 - gegebenenfalls mit dem Bezug 38 - im Formunterteil 32 an dessen Innenkontur 40 anliegend verbleibt. Das Formunterteil 32 wird dann mit einem zweiten Formoberteil 48 verschlossen, wie aus Fig. 8B ersichtlich ist. Durch das zweite Formoberteil 48 wird ein zweiter Formhohlraum 50 der Gießform 30 festgelegt. In den zweiten Formhohlraum 50 wird dann ein zweites Reaktionsgemisch 52 eingebracht, das im zweiten Formhohlraum 50 aufschäumt und den zweiten Formhohlraum 50 vollkommen ausfüllt. Bei diesem zweiten Reaktionsgemisch 52 kann es sich um ein vom ersten Reaktionsgemisch 46 verschiedenes oder um das gleiche Reaktionsgemisch handeln. Das zweite Reaktionsgemisch 52 kann wie das erste Reaktionsgemisch 46 mit einem Brandschutzmittel versehen sein.

Nach Ablauf der Reaktion des zweiten Reaktionsgemisches 52 wird das zweite Formoberteil 48 vom Formunterteil 32 der Gießform 30 entfernt, wonach das fertige Entstehungsbrand-gesicherte Element 54 aus dem Formunterteil 32 entnommen werden kann. Zu diesem Zwecke ist es gegebenenfalls erforderlich, den Spannrahmen 36 zu öffnen. Der über das Entstehungsbrand-gesicherte Element 54 überstehende Randabschnitt 56 des Bezuges 38 wird vom besagten Entstehungsbrand-gesicherten Element 54 abgeschnitten. Bei diesem Entstehungsbrand-gesicherten Element 54 handelt es sich bspw. um ein Polsterteil eines Fahrzeugsitzes.

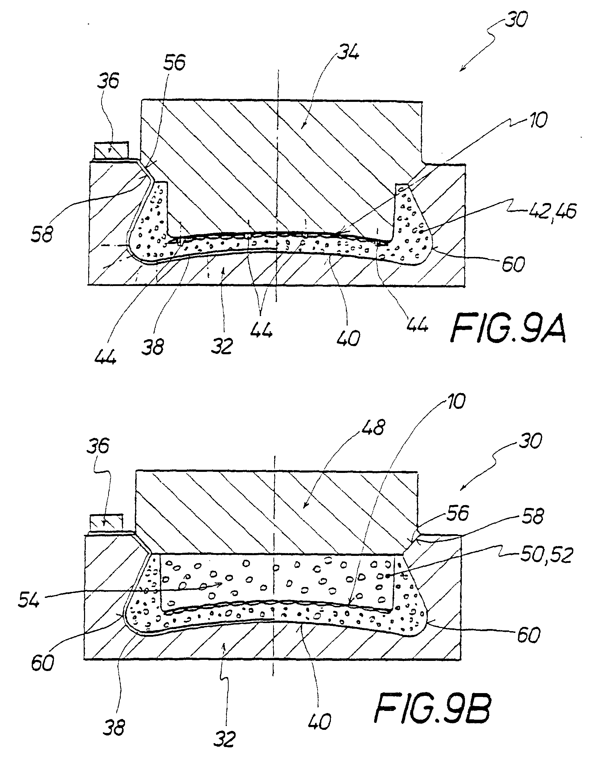

Fig. 9A zeigt in einer der Fig. 8A ähnlichen Schnittdarstellung eine zweite Ausbildung der Gießform 30, die sich von der in Fig. 8A gezeichneten Ausbildung insbes. dadurch unterscheidet, daß das erste Formoberteil 34 nicht an der Innenkontur 40 des Formunterteiles 32 anliegt, sondern mit einem Anlageabschnitt 56 am Außenrand 58 des Formunterteiles 32. Der zwischen dem Formunterteil 32 und dem ersten Formoberteil 34 festgelegte erste Formhohlraum 42 erstreckt sich also um die Seitenwangenabschnitte 60 des Formunterteiles 32 herum.

Am ersten Formoberteil 34 ist mittels Halteelemente 44 ein flächiges Lagervolumenelement 10 temporär festgelegt. In den ersten Formhohlraum 42 wird ein erstes Reaktionsgemisch 46 eingebracht, das im ersten Formhohlraum 42 aufschäumt und den ersten Formhohlraum 42 vollständig ausfüllt.

Auf der linken Seite der Fig. 9A ist wieder ein Bezug 38 dargestellt, der mittels eines Spannrahmens 36 am Formunterteil 32 festgelegt ist.

Nach Ablauf der Reaktion des ersten Reaktionsgemisches 46 wird das erste Formoberteil 34 vom Formunterteil 32 entfernt und am Formunterteil 32 ein zweites Formoberteil 48 angeordnet (sh. Fig. 9B). In den hierdurch gegebenen zweiten Formhohlraum 50 wird anschließend ein zweites Reaktionsgemisch 52 eingebracht, das in dem zweiten Formhohlraum 50 aufschäumt und den zweiten Formhohlraum 50 vollständig ausfüllt. Auf diese Weise ergibt sich wiederum ein Entstehungsbrand-gesichertes Element 54 mit einem vom Bezug 38 bzw. von der Außenoberfläche beabstandeten flächigen Lagervolumenelement 10.

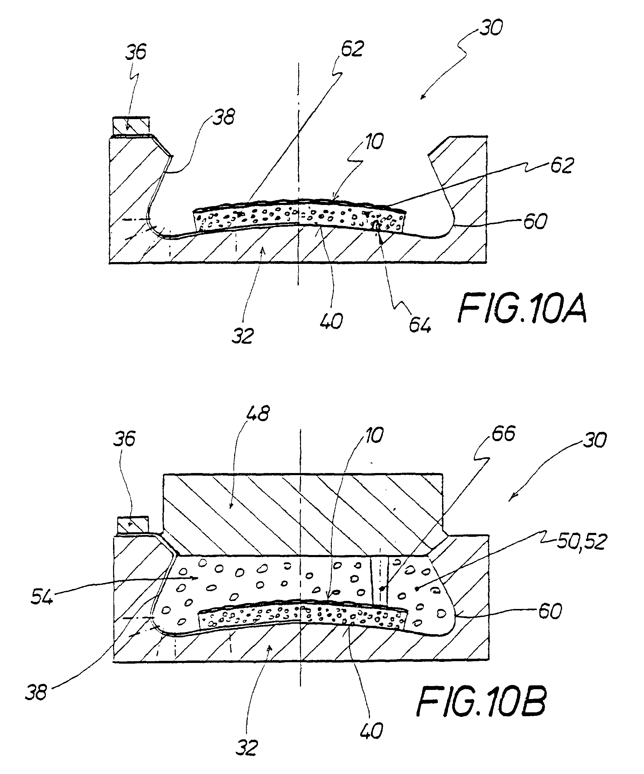

Die Figuren 10A und 10B zeigen ein Formunterteil 32, in welchem ein Schaumkörper 62 angeordnet wird, der innenseitig mit einem flächigen Lagervolumenelement 10 verbunden ist. Dabei ist in Fig.10A wiederum auf der linken Zeichnungshälfte ein Bezug 38 dargestellt, der mittels eines Spannrahmens 36 am Formunterteil 32 passend festgelegt ist.

Zur definierten Festlegung des mit dem flächigen Lagervolumenelement 10 versehenen Schaumkörpers 62 kann das Formunterteil 32 mit Fixierelementen 64 versehen sein. Bei diesen Fixierelementen 64 handelt es sich z.B. um Nadeln o.dgl.

Fig. 10B zeigt das mit einem Formoberteil 48 verschlossene Formunterteil 32. Hierbei ist das Formoberteil 48 mit Abstandshalteelementen 66 versehen, die den Schaumkörper 62 daran hindern, aufzuschwimmen, d.h. sich von der Innenkontur 40 des Formunterteiles 32 abzulösen, wenn in den zwischen dem Formunterteil 32 und dem Formoberteil 48 festgelegten Formhohlraum 50 ein Reaktionsgemisch 52 eingebracht wird. Dieses Reaktionsgemisch 52 kann mit einem Brandschutzmittel versehen sein. Entsprechend kann der Schaumkörper 62 mit einem Brandschutzmittel ausgerüstet sein.

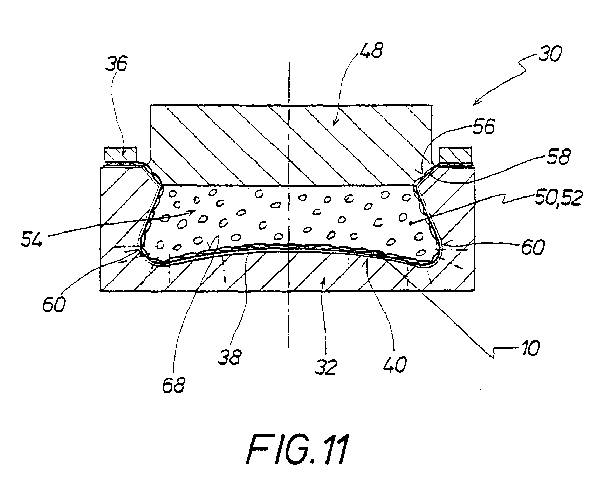

Während die Figuren 8A bis 10B Entstehungsbrand-geschützte Elemente 54 verdeutlichen, die mit einem flächigen Lagervolumenelement 10 versehen sind, das von der Oberfläche des Entstehungsbrand-geschützten Elementes 54 beabstandet ist, verdeutlicht die Fig. 11 ein Entstehungsbrand-geschütztes Element 54, das einen Bezug 38 aufweist, der an seiner Innen- bzw. Rückseite 68 mit einem flächigen Lagervolumenelement 10 kombiniert ist. Das kann bspw. durch eine Kaschierung erfolgen. Mit der Bezugsziffer 32 ist auch in Fig. 11 das Formunterteil einer Gießform 10 bezeichnet, das mit einem Formoberteil 48 verschließbar bzw. verschlossen ist, um einen Formhohlraum 50 festzulegen, der mit einem Reaktionsgemisch 52 unter Ausbildung des Entstehungsbrand-gesicherten Elementes 54 gefüllt wird.

Zum Festlegen des mit dem Lagervolumenelement 10 kaschierten Bezuges 38 an der Innenkontur 40 des Formunterteiles 32 der Gießform 10 dient ein Spannrahmen 36.

Das Reaktionsgemisch 52 kann auch hier mit einem Brandschutzmittel ausgerüstet sein.

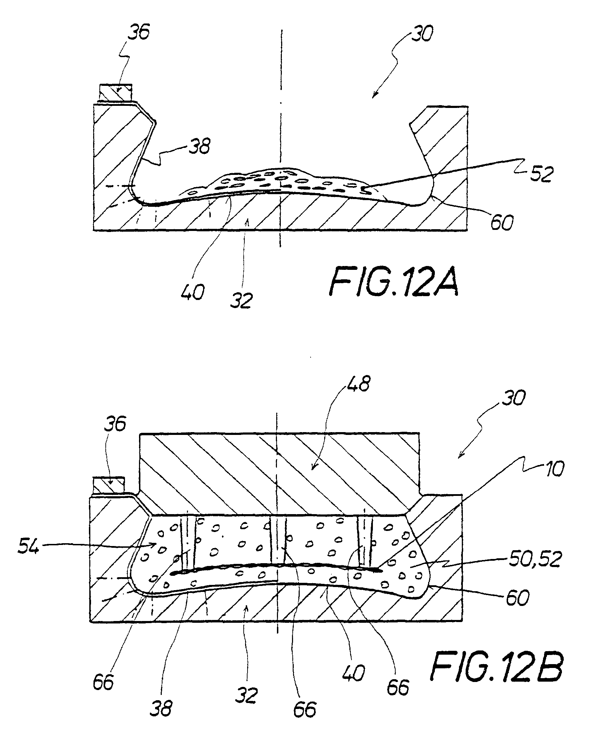

Die Figuren 12A und 12B verdeutlichen eine andere Verfahrensvariante. Hierbei wird in ein offenes Formunterteil 32 einer - gegebenenfalls mit einem Bezug 38 versehenen - Gießform 30 eine bestimmte Quantität eines Reaktionsgemisches 52 eingebracht. Unmittelbar anschließend wird das Formunterteil 32 mit einem Formoberteil 48 während des Ablaufes der Reaktion des Reaktionsgemisches 52, d.h. während des Aufschäumens desselben verschlossen (sh. Fig. 12B). Das Formoberteil 48 weist Abstandshalteelemente 66 auf, an welchen ein flächiges Lagervolumenelement 10 temporär festgelegt ist. Damit das Ausschäumen des Formhohlraumes 50 zwischen dem Formunterteil 32 und dem Formoberteil 48 durch das flächige Lagervolumenelement 10 nicht beeinträchtigt wird, ist das Lagervolumenelement 10 z.B. mit Perforationslöchern 42 (sh. die Figuren 2, 3 bzw. 4) oder mit Schlitzen 28 (sh. die Figuren 5, 6 und 7) ausgebildet.

Nach Ablauf der Reaktion des Reaktionsgemisches 52 im Formhohlraum 50 wird das Formoberteil 48 mit den Abstandshalteelementen 66 vom Formunterteil 32 entfernt. Die im Entstehungsbrand-gesicherten Element 54 durch die entfernten Abstandshalteelemente 66 verbleibenden Kanäle dienen dann in vorteilhafter Weise der weiteren Verbesserung des Sitzklimas des ein Polsterteil insbes. für einen Fahrzeugsitz bildenden Entstehungsbrand-gesicherten Elementes 54.

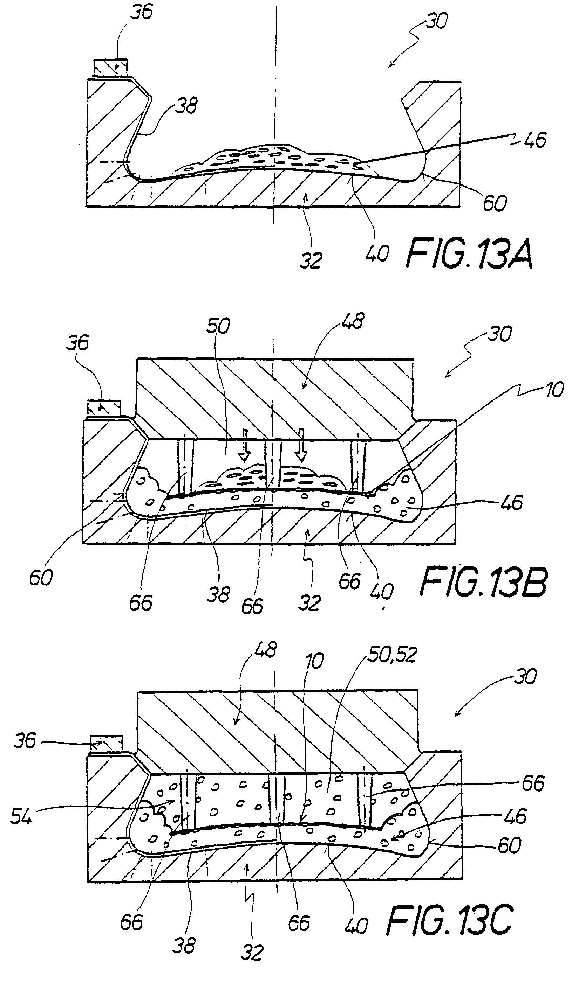

Die Figuren 13A, 13B und 13C verdeutlichen eine Verfahrensvariante, die sich von der in den Figuren 12A und 12B zeichnerisch dargestellten Verfahrensvariante nur dadurch unterscheidet, daß in die offene Gießform 30 eine bestimmte, relativ kleine Quantität eines ersten Reaktionsgemisches 46 eingebracht wird, daß unmittelbar anschließend das offene Formunterteil 32 mit einem Formoberteil 48 verschlossen wird, wobei das erste Reaktionsgemisch 46 im Formhohlraum 50 zwischen dem Formunterteil 32 und dem Formoberteil 48 aufschäumt, ohne den Formhohlraum 50 auszufüllen. Anschließend wird durch das Formoberteil 48 in den verbleibenden Formhohlraum 50 ein zweites Reaktionsgemisch 52 eingebracht, das dann den Formhohlraum 50 vollständig ausfüllt.

Gleiche Einzelheiten sind in den Figuren 8A bis 13C jeweils mit denselben Bezugsziffern bezeichnet, so daß es sich erübrigt, in Verbindung mit allen diesen Figuren alle Einzelheiten jeweils detailliert zu beschreiben.

## Patentansprüche

1. Entstehungsbrand-gesichertes Element wie ein Polsterteil, ein Bauteil, ein Installationselement, ein Dekorationselement o.dgl., das mit einer Entstehungsbrand-bekämpfenden Ausrüstung versehen ist, die an einen Träger gebundenes Löschwasser aufweist, wobei der Träger von einem Pulver gebildet ist, das in Verbindung mit dem Löschwasser zu einem das Löschwasser bindenden Gel aufquillt, das in luft-bzw. wasserdampfdichten, voneinander beabstandeten Lagervolumina bevorratet ist, die durch zwei sich überdeckende Folien (12) festgelegt sind,
**dadurch gekennzeichnet,**
**daß** das Pulver aus einer Mischung auf Polymerbasis mit anorganischen Stoffen besteht, und daß die beiden Folien (12) von den Lagervolumina (16) beabstandet mit Ausnehmungen (22, 28) ausgebildet sind.

2. Entstehungsbrand-gesichertes Element nach Anspruch 1,
**dadurch gekennzeichnet,**
**daß** das Gel aus ca. 5 Gew.-% Pulver und ca. 95 Gew.-% Löschwasser zusammengesetzt ist.

3. Entstehungsbrand-gesichertes Element nach Anspruch 1,
**dadurch gekennzeichnet,**
**daß** die beiden Folien (12) durch zusätzliche Verbindungsstege miteinander verbunden sind.

4. Entstehungsbrand-gesichertes Element nach Anspruch 1,
**dadurch gekennzeichnet,**
**daß** mindestens eine der beiden Folien (12) mit voneinander beabstandeten Vertiefungen ausgebildet ist, welche die Lagervolumina (16) für das Gel bilden.

5. Entstehungsbrand-gesichertes Element nach Anspruch 1,
**dadurch gekennzeichnet,**
**daß** die Ausnehmungen als Löcher (22) ausgebildet sind.

6. Entstehungsbrand-gesichertes Element nach Anspruch 1,
**dadurch gekennzeichnet,**
**daß** die Ausnehmungen als Schlitze (28) ausgebildet sind.

7. Verfahren zum Herstellen eines gegen Entstehungsbrand gesicherten Elementes (54), wie insbes. eines Polsterteiles,
**dadurch gekennzeichnet,**
**daß** zur Herstellung eines Lagervolumenelementes (10) zwei luftdichte Folien (12) miteinander derartig verschweißt werden, daß sich zwischen den beiden Folien (12) voneinander beabstandete, mit einem Gel (18) gefüllte Lagervolumina (16) ergeben, daß das flächige Lagervolumenelement (10) in eine Gießform (30) eingebracht wird, und daß danach in die Gießform (30) ein Reaktionsgemisch eingebracht wird, das in der Gießform (30) aufschäumt und die Gießform (30) unter Ausbildung des Elementes (54) ausfüllt.

8. Verfahren nach Anspruch 7,
**dadurch gekennzeichnet,**
**daß** das flächige Lagervolumenelement (10) in die Gießform (30) derartig eingebracht wird, daß es vom Formunterteil (32) der Gießform (30) beabstandet ist.

9. Verfahren nach Anspruch 7,
**dadurch gekennzeichnet,**
**daß** in die Gießform (30) ein Schaumkörper (62) eingebracht wird, der an seiner Innen- bzw. Rückseite (68) mit einem flächigen Lagervolumenelement (10) verbunden ist.

10. Verfahren nach Anspruch 7,
**dadurch gekennzeichnet,**
**daß** in die Gießform (30) ein Bezug (38) eingebracht wird, der an seiner Innen- bzw. Rückseite mit dem flächigen Lagervolumenelement (10) verbunden ist.

## Claims

1. Element protected against fire outbreaks such as an upholstery element, a structural element, an installation element, a decorative element or the like, which is provided with a flame-retardant finish, which has extinguishing water bound to a substrate, the substrate being formed by a powder which together with the extinguishing water swells to form a gel binding the extinguishing water, which is stored in airtight and water-vapour-impermeable storage pockets spaced apart from one another, which are established by two sheets (12) covering each other, **characterized in that** the powder consists of a polymer-based mixture with inorganic substances, and **in that** the two sheets (12) are formed with clearances (22, 28) spaced apart by the storage pockets (16).

2. Element protected against fire outbreaks according to Claim 1, **characterized in that** the gel is composed of approximately 5% by weight powder and approximately 95% by weight extinguishing water.

3. Element protected against fire outbreaks according to Claim 1, **characterized in that** the two sheets (12) are joined to each other by additional joining webs.

4. Element protected against fire outbreaks according to Claim 1, **characterized in that** at least one of the two sheets (12) is formed with depressions spaced apart from one another, which form the storage pockets (16) for the gel.

5. Element protected against fire outbreaks according to Claim 1, **characterized in that** the clearances are formed as holes (22).

6. Element protected against fire outbreaks according to Claim 1, **characterized in that** the clearances are formed as slits (28).

7. Method for producing an element (54) protected against fire outbreaks, such as in particular an upholstery element, **characterized in that**, to produce a storage pocket element (10), two airtight sheets (12) are welded to each other in such a way that spaced-apart storage pockets (16) filled with a gel (18) are obtained between the two sheets (12), **in that** the sheet-like storage pocket element (10) is introduced into a casting mould (30), and **in that** thereafter a reaction mixture is introduced into the casting mould (30), expands in the casting mould (30) and fills the casting mould (30), thereby forming the element (54).

8. Method according to Claim 7, **characterized in that** the sheet-like storage pocket element (10) is introduced into the casting mould (30) in such a way that it is spaced apart from the lower mould part (32) of the casting mould (30).

9. Method according to Claim 7, **characterized in that** a foam body (62), which is joined on its inner or rear side (68) to a sheet-like storage pocket element (10), is introduced into the casting mould (30).

10. Method according to Claim 7, **characterized in that** a covering (38), which is joined on its inner or rear side to the sheet-like storage pocket element (10), is introduced into the casting mould (30).

## Revendications

1. Elément protégé contre le départ de feu, tel qu'une portion de capitonnage, une portion de construction, un élément d'installation, un élément de décoration ou analogue, du type présentant un matériau combattant le départ de feu qui comporte lui-même de l'eau d'extinction fixée à un support, ce support étant constitué par une poudre qui, en combinaison avec l'eau d'extinction, se détend en un gel qui retient l'eau d'extinction et qui est logé dans des couches ou nappes volumiques étanches à l'air et à l'eau, espacées l'une de l'autre et qui sont réunies par deux feuilles (12) se recouvrant, **caractérisé en ce que** la poudre consiste en un mélange d'une base polymère et d'une substance non organique et **en ce que** les deux feuilles (12) sont espacées des nappes volumiques (16) par des ouvertures (22, 28).

2. Elément protégé contre le départ de feu selon la revendication 1, **caractérisé en ce que** le gel se compose d'environ 5% en poids de poudre et environ 95% en poids d'eau d'extinction.

3. Elément protégé contre le départ de feu selon la revendication 1, **caractérisé en ce que** les deux feuilles (12) sont réunies ensemble par des plots de liaison supplémentaires.

4. Elément protégé contre le départ de feu selon la revendication 1, **caractérisé en ce qu'**au moins l'une des deux feuilles (12) comporte des creux espacés l'un de l'autre et qui forment les volumes de la nappe volumique, destinés à recevoir le gel.

5. Elément protégé contre le départ de feu selon la revendication 1, **caractérisé en ce que** les ouvertures sont constituées par des perforations.

6. Elément protégé contre le départ de feu selon la revendication 1, **caractérisé en ce que** les ouvertures sont constituées par les fentes (28).

7. Procédé pour la fabrication d'un élément protégé contre le départ de feu (54) tel qu'en particulier une portion de capitonnage, **caractérisé en ce que**, en vue de la constitution d'un élément de nappe volumique (10), deux feuilles étanches à l'air (12) sont soudées ensemble d'une manière telle qu'entre les deux feuilles (12) espacées l'une de l'autre est créée une nappe volumique (16) remplie d'un gel (18), **en ce que** l'élément de nappe volumique plat (10) est amené dans un moule de coulée (30) et **en ce que**, dans le moule de coulée (30), on introduit ensuite un mélange réactionnel qui mousse dans le moule de coulée (30) et remplit complètement le moule de coulée (30) en formant l'élément (54).

8. Procédé selon la revendication 7, **caractérisé en ce que** l'élément de nappe volumique plat (10) est introduit dans le moule de coulée (30) d'une manière telle qu'il est écarté du fond (32) du moule (30).

9. Procédé selon la revendication 7, **caractérisé en ce que** dans le moule de coulée (30) est introduit un corps en mousse (62) qui est réuni par sa face interne ou postérieure (60) à un élément de nappe volumique plat (10).

10. Procédé selon la revendication 7, **caractérisé en ce que** dans le moule de coulée (30) est introduite une garniture ou housse (38), réunie par sa face interne ou postérieure (60) à un élément de nappe volumique plat (10).
